# EUROPEAN PATENT APPLICATION

(11) **EP 1 071 158 A2**
(43) Date of publication of application: **24.01.2001**
(21) Application number: 00115549.8
(22) Date of filing: 19.07.2000
(51) Int. Cl.: H01Q 9/04, H01R 13/405, B29C 45/14, H01R 43/24

(54) **Overmolded electrical connection to ring antenna**

(30) Priority: 21.07.1999 US 144928 P
(71) Applicant: Siemens Automotive Corporation, Auburn Hills, Michigan 48326-2980 (US)
(72) Inventor: Mariotti, Suzette I., Royal Oak, 48073 MI (US); Rinaldo, Anthony N., Tempe, 85285 AZ (US)
(74) Representative: Allen, Derek

(57) **Abstract**

An immobilizer comprises a coil antenna in an antenne housing having a central aperture to receive lock on a vehicle. The antenne is connected to a circuit board which is connected to a wire harness (25) by having the wire harness wires (46) connected to connecting pins (34). A circuit board housing is then molded over the connection, such that the connections (49) are protected and within the housing. A circuit board is then mounted within the housing and connected to pins (38) and (42). The connection of the wire harness to the pins is within the projected area of the circuit board, thus reducing the required space, since no additional space is necessary for the connection. The invention reduces the required space, and further provides a more robust assembly.

## Description

This application claims priority to provisional application serial number 60/144,928 filed 21 July 1999.

This invention relates to a method of forming a ring antenna and its associated wire harness as an overmolded part. Modem vehicles are being provided with more and more electrical components. In particular, a device known as an immobilizer is often associated with a vehicle ignition. In one well-known type of immobilizer, a ring antenna surrounds the lock cylinder into which the vehicle key is inserted. The ring antenna communicates with signalling devices on the key. Historically, the ring antenna has been connected to a wire harness for carrying several communications to and from an associated circuit board by a plug-in connection. The plug-in connection has typically been positioned outside the projected area of the circuit board, and on an outer end of a housing. This arrangement has several drawbacks. The use of the plug-in connector requires additional steps. The plug-in connector extends outwardly from the side of the housing, and thus requires additional space. These devices are mounted in an area of the vehicle (the steering column) wherein space is at a premium. Thus, it would be desirable to decrease the required space. Moreover, the plug-in connection may become loose over time, which is also undesirable.

In a disclosed embodiment of this invention, the wire harness is directly connected to electrical pins, and a plastic is then molded over these connections. Moreover, the connections are preferably made within the projected area of an integrated circuit board such that the connections do not extend outwardly of the housing where they would require additional space.

In a disclosed method of forming the inventive structure, a core or bobbin is initially molded. Several pins are stitched into the bobbin, and a ring antenna is wound onto the core and connected to two pins. A wire harness is then connected to the other pins. Plastic is then molded over the connections, closing and protecting the connections and forming a housing. An integrated circuit board is mounted to communicate with the connections. A housing cover may then cover the integrated circuit.

These and other features of the present invention can be best understood from the following specification and drawings, the following of which is a brief description.
Figure 1 shows a final ring immobilizer component.
Figure 2A shows a first step in forming the component of Figure 1.
Figure 2B shows a subsequent step.
Figure 2C shows yet another subsequent step.
Figure 2D shows another subsequent step; and
Figure 2E shows a final step.

A component 20 which is part of a vehicle inimobilizer system incorporates a cylindrical portion 22 which receives a ring antenna. This portion is to be mounted around a lock cylinder in a vehicle, as known. A wire harness connector 24 is to be connected into another wire harness on the vehicle, and a wire harness 25 extends to a circuit housing 26. As will be explained, a method of manufacturing the component 20 eliminates many prior art steps, provides a more robust part, and further requires less space.

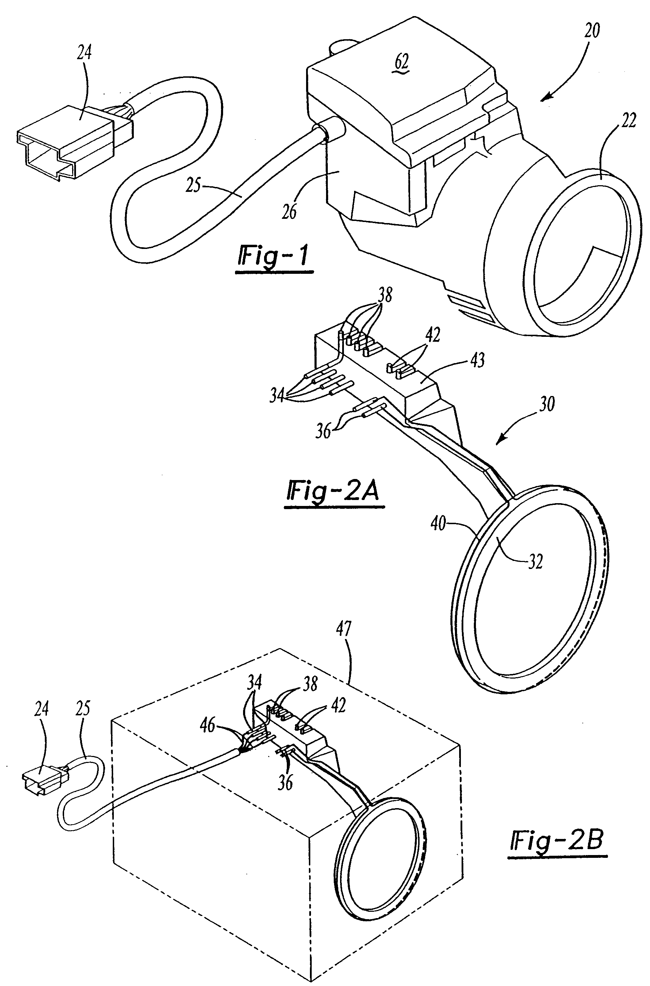

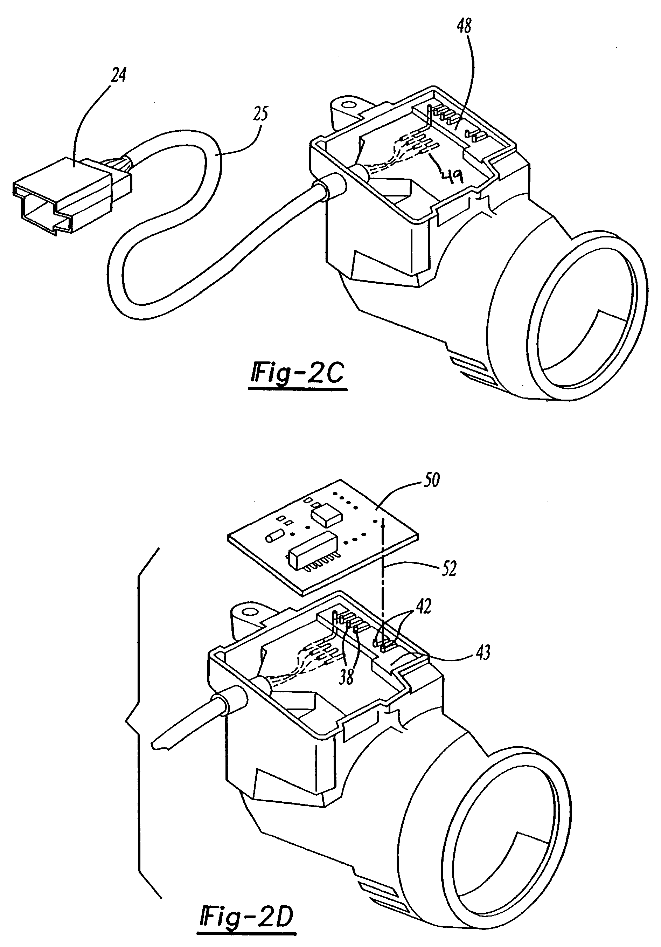

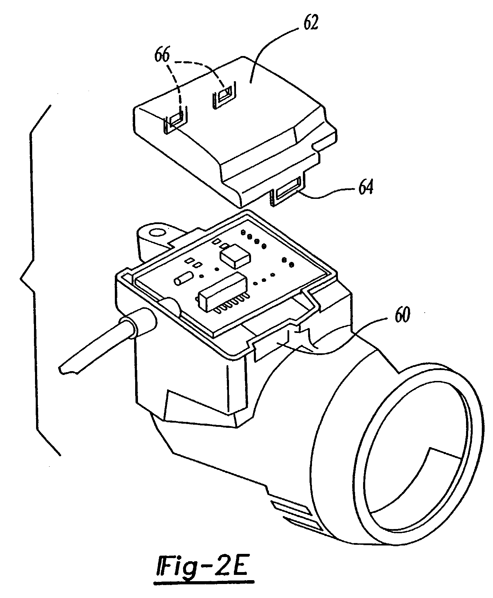

A bobbin 30 is illustrated in Figure 2A incorporating a cylindrical base 32, 10 and pins 34 and 36. Connection pins 38 and 42 are to be connected to a circuit board, as explained below. The pins 34, 36, 38 and 42 are all received in an elongate plastic base 43. A wire 40 is wound around base 32, and connected to the pins 36. This wire forms the coil antenna. As shown in Figure 2B, the next step in manufacturing component 20 is to bring the wire harness 25 having wires 46 which are crimped to the pins 34. At this point, the electrical connections to plug 24 are complete. No plug-in is necessary. As shown schematically at 47, the intermediate component shown in Figure 2B is then placed into a mold. Plastic is molded over the base 43, base 32, and the pins 34 and 36. Thus, the connections are enclosed, and protected as shown at 49 in Figure 2C. The overmolded part is best shown in Figure 2C. As shown in Figure 2D, in the next step, a circuit board 50 is brought downwardly onto the pins 38 and 42. As shown at 52, the board is simply brought downwardly and pressed onto the pins. As shown in Figure 2E, a cover 62 having locking flanges 64 and 66 may then snap onto a outer housing 60 which receives circuit board 50.

As can be appreciated, the connection of the wire harness 25 to the pins 34 is within the projected area of the board 50. Thus, no additional space is necessary for the connection. Moreover, the connection is protected within the housing, and additional electrical connection steps are not required.

The above invention has been disclosed with reference to a preferred embodiment. However, a worker in this art would recognize that certain modifications would come within the scope of this invention. For that reason, the following claims should be studied to determine the true scope and content of this invention.

## Claims

1. A vehicle immobilizer component comprising:
a coil antenna received within an antenna housing having a central aperture to receive a lock on a vehicle;
said coil antenna being electrically connected to a circuit board, said circuit board being received within a circuit housing connected to said antenna housing, said circuit board further communicating with a plurality of connection pins; and
a wire harness electrically connected to said connection pins, the electrical connection of said wire harness to said connection pins being within said circuit housing.

2. A component as recited in Claim 1, wherein said housings are formed of plastic, and plastic covers said electrical connection of said wire harness to said pins.

3. A component as recited in Claim 1, wherein said electrical connection is within a projected area of said circuit board.

4. A method of manufacturing an immobilizer system component comprising the steps of:
(1) winding an antenna on a portion of a bobbin member to surround an opening, and connecting said antenna to electrical connections;
(2) connecting a wire harness to several electrical connectors on said bobbin; and
(3) molding plastic to form a housing, and to enclose said electrical connection of said wire harness to said electrical connectors.

5. A method as set forth in Claim 4, further comprising the steps of mounting a circuit board onto connection pins which communicate with both said antenna and said wire harness.
